# EUROPÄISCHE PATENTSCHRIFT

(11) **EP 3 687 753 B1**
(45) Veröffentlichungstag und Bekanntmachung des Hinweises auf die Patenterteilung: **04.12.2024**
(21) Anmeldenummer: 18788661.9
(22) Anmeldetag: 26.09.2018
(51) Int. Cl.: B29C 33/12, B29C 45/14, G06K 19/077, G06K 17/00, B60R 13/10, B44B 5/00, B29C 37/00

(54) **VERFAHREN UND VORRICHTUNG ZUM VERSEHEN EINES KENNZEICHENS, VORZUGSWEISE EINES KRAFTFAHRZEUG-KENNZEICHENS, MIT EINEM DATENTRÄGER**
METHOD AND DEVICE FOR PROVIDING A LICENCE PLATE, PREFERABLY A MOTOR VEHICLE LICENCE PLATE, WITH A DATA CARRIER
PROCÉDÉ ET DISPOSITIF PERMETTANT DE DOTER UNE PLAQUE D'IMMATRICULATION, DE PRÉFÉRENCE UNE PLAQUE D'IMMATRICULATION DE VÉHICULE AUTOMOBILE, D'UN SUPPORT DE DONNÉES

(30) Priorität: 29.09.2017 DE 102017009108; 20.06.2018 DE 102018004849
(43) Veröffentlichungstag der Anmeldung: 05.08.2020
(73) Patentinhaber: Tönnjes ISI Patent Holding GmbH, 27751 Delmenhorst (DE)
(72) Erfinder: TÖNJES, Piet, 27751 Delmenhorst (DE)
(74) Vertreter: Hoener, Matthias
(86) Internationale Anmeldenummer: PCT/EP2018/000451
(87) Internationale Veröffentlichungsnummer: WO 2019/063124

(56) Entgegenhaltungen:
- WO-A1-2016/050054
- WO-A1-99/19170
- DE-A1- 102013 109 850
- DE-A1- 3 203 801
- DE-A1- 3 203 801
- US-A1- 2008 042 848
- US-A1- 2009 265 966

## Beschreibung

Die Erfindung betrifft ein Verfahren zum Versehen eines Kennzeichens, vorzugsweise eines Kraftfahrzeug-Kennzeichens, mit mindestens einem berührungslos auslesbaren Datenträger gemäß dem Oberbegriff des Anspruchs 1.

Aus der DE 32 03 801 A1 ist eine Vorrichtung zur Herstellung konventioneller Kfz-Kennzeichenschilder bekannt. Bei dieser Vorrichtung sollen Buchstaben- und Zahlenkombinationen nach einem vorgegebenen Programm in eine Materialbahn zur Bildung eines Kennzeichen-Körpers des herzustellenden Kfz-Kennzeichenschilds eingeprägt werden.

Aus der DE 10 2013 109 850 A1 ist ein Verfahren zur Herstellung konventioneller Kfz-Kennzeichenschilder bekannt. Dieses Verfahren zeichnet sich dadurch aus, dass auf vertiefte oder erhabene Buchstaben oder Zahlen ein Farbauftrag aus einer Vielzahl kleiner Farbportionen aufgebracht wird.

Kennzeichen, und zwar vor allem Kraftfahrzeug-Kennzeichen, werden zunehmend mit berührungslos auslesbaren und vorzugsweise auch berührungslos beschreibbaren Datenträgern versehen.

Die WO 2016/050054 A1 befasst sich mit einem PVC-Kennzeichen, in das ein RFID-Chip eingebettet ist.

Die US 2009/0265966 A1 beschreibt ein Kfz-Kennzeichen mit einem Transponder. Der Transponder ist in einem Kunststoffrahmen des Kennzeichen-Körpers eingebettet. Dazu ist der Kunststoffrahmen zunächst teilweise offen ausgebildet. An der offenen Stelle wird der Transponder positioniert und anschließend mit Kunststoff umspritzt.

Ein Fahrzeugkennzeichen mit einem berührungslos lesbaren elektronischen Datenträger und ein Herstellungsverfahren für ein solches Fahrzeugkennzeichen sind aus der WO 99/19170 A1 bekannt. Hier ist ein Kennzeichenkörper des Fahrzeugkennzeichens mit einer Aufnahmeöffnung versehen, in die der Datenträger eingesetzt wird. Anschließend wird die Aufnahmeöffnung auf der Rückseite des Kennzeichenkörpers mit einer Abdeckung verschlossen und dadurch der Datenträger in der Aufnahmeöffnung fixiert. Wie der Datenträger in die Aufnahmeöffnung des Kennzeichenkörpers gelegt wird, ist nicht offenbart.

Schließlich ist aus der US 2008/042848 A1 ein Kraftfahrzeugkennzeichen mit einem Transponder bekannt, der auf einem Kunststoffeinsatz befestigt ist. Der Kunststoffeinsatz wiederum ist über einen als Antenne dienenden Schlitz im Kennzeichenkörper des Kraftfahrzeugkennzeichens befestigt. Das soll mit einer Handhabungseinrichtung geschehen.

Die Datenträger müssen exakt an oder in einer dafür vorgesehenen Aufnahme im Kennzeichenkörper des Kennzeichens oder in aufeinanderfolgenden Aufnahmen einer Materialbahn, aus der Kennzeichenkörper ausgestanzt werden, positioniert werden, damit sie störungsfrei arbeiten, insbesondere ausgelesen werden können. Der stetig steigende Bedarf an mit Datenträgern versehenen Kennzeichen erfordert eine Automatisierung der Applikation der Kennzeichenkörper oder Materialbahnen mit den Datenträgern. Bisher sind keine entsprechenden Verfahren und Vorrichtungen bekannt.

Nach alledem liegt der Erfindung die Aufgabe zugrunde, ein vollautomatisch arbeitendes Verfahren zu schaffen, womit Kennzeichen, vorzugsweise Kraftfahrzeug-Kennzeichen, oder Rohlinge und/oder Materialbahnen zur Bildung derselben, präzise mit berührungslos auslesbaren Datenträgern beschickt werden können.

Ein Verfahren zur Lösung der genannten Aufgabe weist die Maßnahmen des Anspruchs 1 auf. Demnach werden jeweils ein einziger oder gegebenenfalls auch mehrere Datenträger von einer Handhabungseinrichtung gezielt erfasst und danach die Position des jeweiligen von der Handhabungseinrichtung gehaltenen Datenträgers durch eine bildgebende Einrichtung ermittelt, um anhand der dabei erhaltenen Daten, insbesondere Positionsdaten, des Datenträgers an der Handhabungseinrichtung den betreffenden Datenträger in die betreffende Aufnahme des in einer bestimmten Position relativ zur Handhabungseinrichtung bereitgehaltenen Kennzeichenkörpers oder Materialbahn einzusetzen. Indem von der bildgebenden Einrichtung der Datenträger nach dem Erfassen von der Handhabungseinrichtung hinsichtlich seiner Position erfasst wird, ist die exakte Position des Datenträgers an der Handhabungseinrichtung vom Zeitpunkt der Erfassung durch die bildgebende Einrichtung bekannt. Aus dieser bekannten Position kann dann die Handhabungseinrichtung den Datenträger exakt in die Aufnahme einsetzen oder auf die Aufnahme aufsetzen. Die Position der Aufnahme ist bekannt durch ein an einer bestimmten Position relativ zur Handhabungseinrichtung erfolgendes Bereithalten des die Aufnahme aufweisenden Kennzeichenkörpers oder der fortlaufenden, durchgehenden Materialbahn mit an definierten Stellen derselben vorhandenen, aufeinanderfolgenden Aufnahmen. Dieses Verfahren ermöglicht eine äußerst präzise Positionierung des Datenträgers auf bzw. in der jeweiligen Aufnahme.

Das Verfahren ist so ausgebildet, dass vor dem von der Handhabungseinrichtung erfolgenden Bestücken der mit einem Datenträger zu versehenden Aufnahme für den Datenträger im oder am Kennzeichenkörper bzw. der Materialbahn ermittelt wird, und zwar bevorzugt durch eine Messeinrichtung oder bildgebende Einrichtung. Insbesondere handelt es sich dabei um eine separate bildgebende Einrichtung. Dadurch kann die Handhabungseinrichtung von der bekannten Position des oder jeden von ihr gehaltenen Datenträgers denselben exakt an die Position bzw. Stelle überführen, die der Datenträger in der jeweiligen Aufnahme des Kennzeichenkörpers oder der Materialbahn aufweisen soll. Es kann also die den Datenträger haltende Handhabungseinrichtung den Kennzeichenkörper oder die Materialbahn exakt an der vorgesehenen Stelle der Aufnahme mit dem mindestens einen Datenträger bestücken.

Gemäß einer Weiterbildungsmöglichkeit des Verfahrens ist es vorgesehen, dass von einer bildgebenden Einrichtung aus einer Mehrzahl von Datenträgern, die vorzugsweise flach auf einer ebenen Unterlage liegend bereitgestellt werden, die vorzugsweise gezielte Erfassung jeweils vorzugsweise eines einzelnen Datenträgers, ggf. aber auch gleichzeitig mehrerer Datenträger, der Handhabungseinrichtung unterstützt, vorzugsweise gesteuert wird. Dadurch kann die Handhabungseinrichtung zuverlässig die Position eines besonders günstig liegenden Datenträgers im Vorrat vorgehaltenen Datenträger anfahren und den oder jeden ausgewählten und in seiner Position bestimmten Datenträger zuverlässig erfassen. Es wird so von der Handhabungseinrichtung jeweils ein oder jeder Datenträger unterstützt von der bildgebenden Einrichtung aus einem Vorrat mehrerer Datenspeicher "herausgepickt".

Eine Weiterbildungsmöglichkeit des Verfahrens sieht es vor, nach dem Erfassen eines Datenträgers von der Handhabungseinrichtung den von derselben gehaltenen Datenträger zu prüfen bzw. jeweils zu prüfen. Dadurch wird sichergestellt, dass keine Aufnahme mit einem nicht-funktionsfähigen Datenträger bestückt wird.

Eine Weiterbildung des Verfahrens sieht es vor, nach dem Erfassen jedes Datenträgers vor der Handhabungseinrichtung mindestens einzelne bzw. bestimmte Daten aus dem betreffenden von der Handhabungseinrichtung gehaltenen Datenträger auszulesen und diese vorzugsweise in einem Speicher abzulegen. Dadurch ist eine Protokollierung des jeweils einem Kennzeichen zugeordneten Datenträgers möglich. So lässt sich beispielsweise ein Herstellungsprotokoll des Kennzeichens lückenlos erstellen. Gegebenenfalls kann gleichzeitig mit dem Auslesen mindestens einiger Daten auch eine Kontrolle des jeweiligen Datenträgers auf seine Funktion durchführen.

Es kann vorgesehen sein, dass der Datenträger in der Position, in der er auf die Aufnahme aufgesetzt oder in die Aufnahme eingesetzt wird, vorfixiert wird durch mindestens einen Haftpunkt, der vorher in oder an der Aufnahme appliziert worden ist. Dadurch wird der von der Handhabungseinrichtung in die Aufnahme eingesetzt Datenträger zugleich in bzw. auf der Aufnahme vorfixiert. Dadurch behält der Datenträger seine Position, mit der er der Aufnahme zugeführt worden ist, bei. Der Datenträger kann in der Aufnahme oder auf der Aufnahme während des gegebenenfalls erfolgenden Weitertransports zu einer nachfolgenden Arbeitsstation und/oder während der abschließenden vollständigen Fixierung auf der Aufnahme bzw. in der Aufnahme nicht verrutschen.

Eine andere vorteilhafte Ausgestaltung des Verfahrens sieht es vor, dass der Datenträger beim von der Handhabungseinrichtung erfolgenden Einsetzen in die zum Beispiel als Mulde oder Durchbruch ausgebildete Aufnahme in derselben vorfixiert wird, vorzugsweise durch Aufsetzen auf mindestens eine der Aufnahme vorher zugeordnete Haftstelle. Der Datenträger wird dann von der Handhabungseinrichtung an der exakten Position relativ zur Aufnahme auf der wenigstens einen Haftstelle abgelegt oder aufgedrückt. Dabei geht der Datenträger eine Klebeverbindung mit der Haftstelle ein, die den Datenträger auf der mindestens einen Haftstelle haftend positionsgenau unverschiebbar am bzw. im Kennzeichenkörper oder der Materialbahn vorfixiert. Der Kennzeichenkörper oder die Materialbahn und der mindestens eine vorfixierte Datenträger können dann weiteren Behandlungen unterzogen werden, ohne dass dabei oder auf dem Weg dorthin eine Positionsänderung des Datenträgers relativ zur Aufnahme stattfinden kann.

Gemäß einer vorteilhaften Ausgestaltungsmöglichkeit des Verfahrens wird von der Handhabungseinrichtung der Datenträger derart in eine jeweilige vorzugsweise als Durchbruch im Kennzeichenkörper oder Materialbahn ausgebildete Aufnahme eingesetzt, dass der Datenträger, vorzugsweise ein umlaufender Rand desselben, von den Umrissen des Durchbruchs beabstandet ist. Bevorzugt wird der Datenträger so in den Durchbruch eingesetzt, dass ein umlaufender Rand desselben gleichmäßig von den Umrissen des Durchbruchs beabstandet ist und/oder ein umlaufender Spalt zwischen den Umrissen des Durchbruchs und dem Rand des Datenträgers bestehen bleibt bzw. gebildet wird. Dadurch wird ein Kontakt des Datenträgers mit dem vorzugsweise aus einem leitenden Material gebildeten Kennzeichenkörper oder Materialbahn verhindert. Der Datenträger im Durchbruch ist mit anderen Worten elektrisch gegenüber dem leitenden Kennzeichenkörper bzw. der leitenden Materialbahn isoliert. Das ist eine wichtige Voraussetzung für ein zuverlässiges und fehlerfreies Auslesen der auf dem Datenträger abgelegten Daten, und zwar auch aus relativ großer Entfernung.

Eine andere vorteilhafte Ausgestaltungsmöglichkeit des Verfahrens sieht es vor, dass der Kennzeichenkörper oder die Materialbahn von einer Rückseite her mit der wenigstens einer Haftstelle versehen und/oder mit dem wenigstens einen Datenträger bestückt und/oder der jeweilige Datenträger in seiner Aufnahme eingegossen bzw. vergossen wird. Die genannten Maßnahmen erfolgen somit von der Rückseite des Kennzeichenkörpers oder der Materialbahn her. Von hier aus ist der Durchbruch zugänglich und durch die nach dem Montierten des Kennzeichens vom Betrachter sichtbare Folie auf der Vorderseite des Kennzeichenkörpers überdeckt. Der Kennzeichenkörper oder die Materialbahn werden also im quasi umgedrehten Zustand mit mindestens einem Datenträger bestückt. Falls jedoch die Aufnahme nicht als ein durchgehender Durchbruch, sondern eine vertiefte Mulde ausgebildet ist, die von der Vorderseite des Kennzeichens ausgeht, kann das Kennzeichen richtig herum, also mit obenliegender Vorderseite mit dem jeweiligen Datenträger versehen werden. Dann muss die Folie, sofern eine solche erforderlich ist bzw. vorgesehen ist, nachträglich auf die Vorderseite des Kennzeichens aufgebracht werden, wenn nämlich die Mulde mit dem Datenträger bestückt und gegebenenfalls ausgegossen ist.

Bevorzugte Ausführungsbeispiele der Erfindung werden nachfolgend anhand der Zeichnung näher erläutert. Diese zeigen:

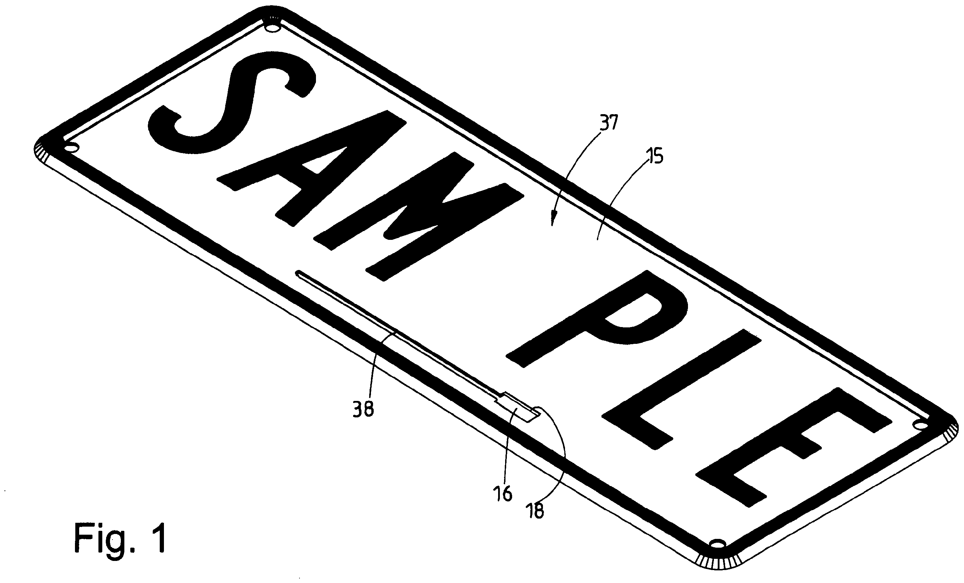

- Fig. 1: eine perspektivische Darstellung eines (noch mit keiner Folie kaschierten) Kraftfahrzeugkennzeichens,
- Fig. 2: einen teilweisen Querschnitt durch das Kraftfahrzeugkennzeichen der Fig. 1 im vergrößerten Maßstab,
- Fig. 3: eine perspektivische Gesamtansicht der erfindungsgemäßen Vorrichtung,

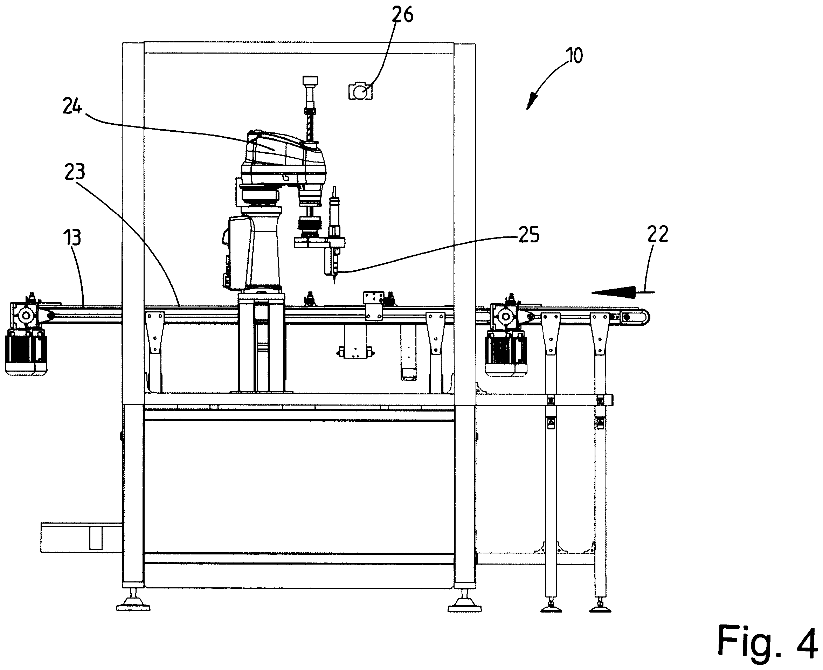

- Fig. 4: eine erste Arbeitsstation der Vorrichtung der Fig. 3 in einer Seitenansicht,

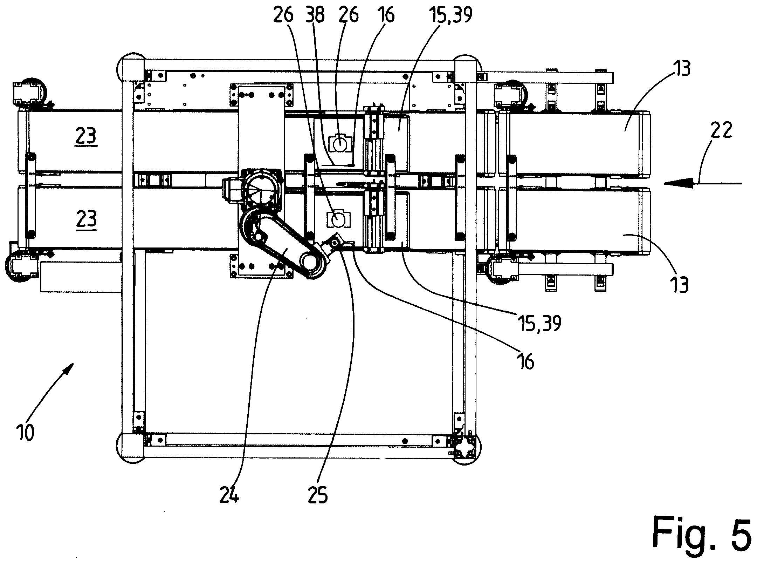

- Fig. 5: eine Draufsicht auf die Arbeitsstation der Fig. 4,

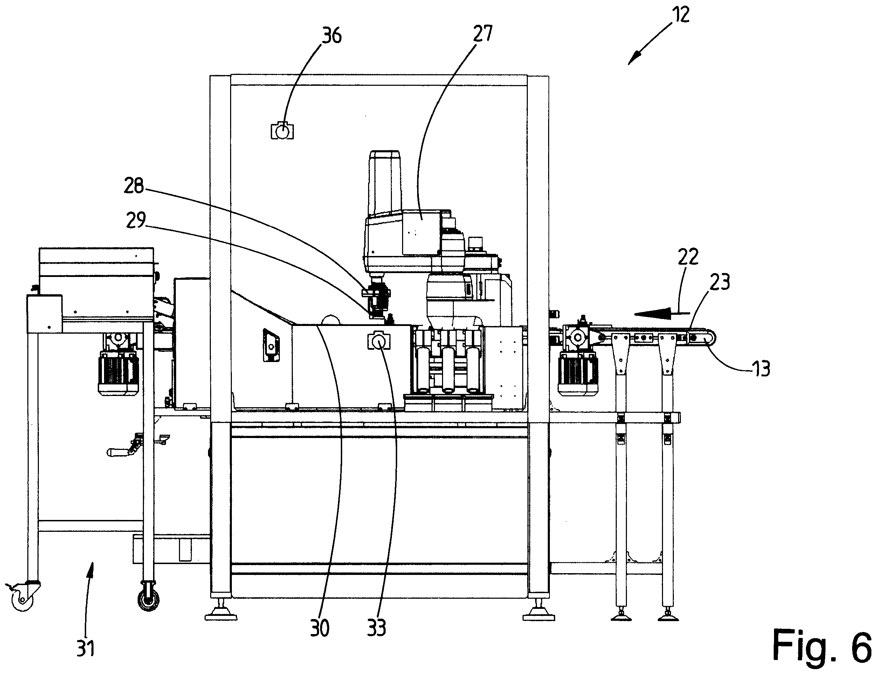

- Fig.6: eine Seitenansicht einer zweiten Arbeitsstation der Vorrichtung der Fig. 3, und

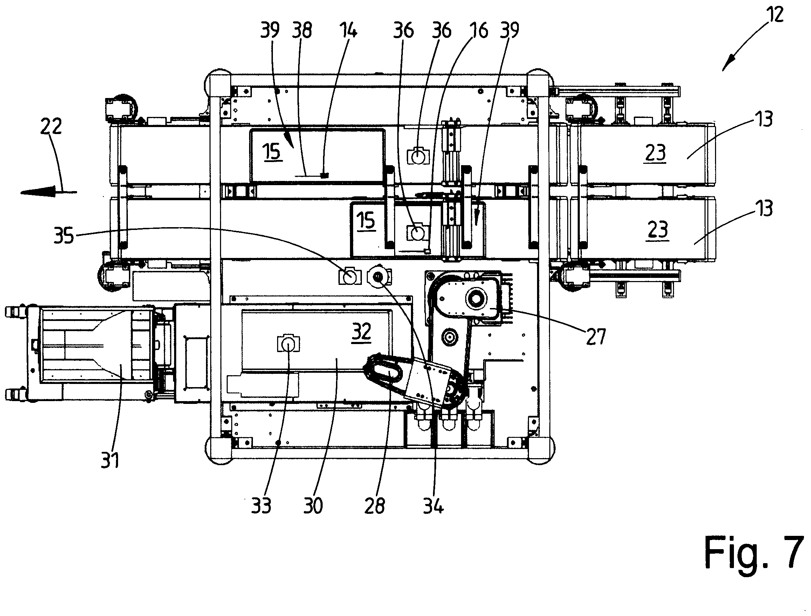

- Fig. 7: eine Draufsicht auf die Arbeitsstation der Fig. 6.

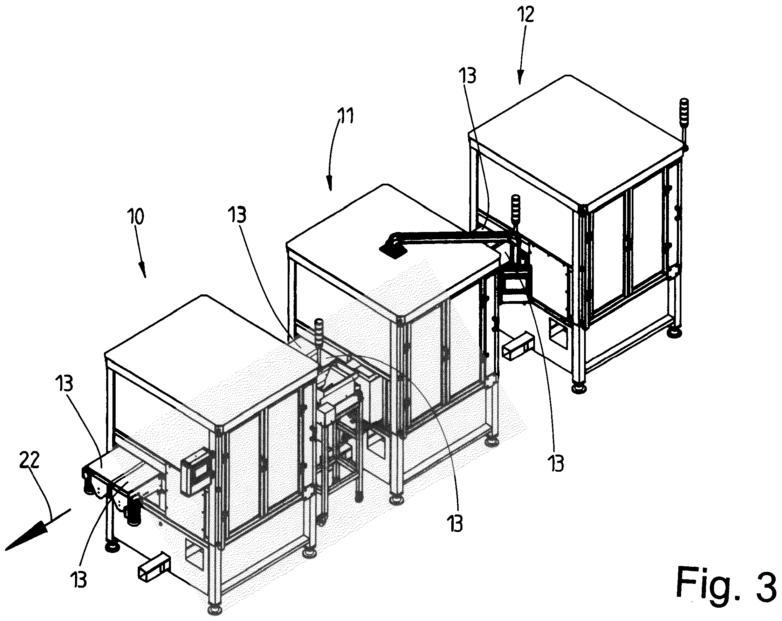

Die in der Fig. 3 als Ganzes gezeigte Vorrichtung verfügt über drei Arbeitsstationen 10, 11 und 12, denen jeweils individuelle unterschiedliche Funktionen zugeordnet sind. Die drei Arbeitsstationen 10, 11 und 12 sind im gezeigten Ausführungsbeispiel durch zwei parallele, vorzugsweise gleiche Förderer 13 verkettet, die als Gurtförderer ausgebildet sind. Die Erfindung lässt sich aber auch mit anderen Förderern, andere Verläufe aufweisenden Förderern, mehr als zwei Förderern und/oder nur einem einzigen Förderer 13 realisieren.

Die Vorrichtung dient dazu, Kennzeichen, und zwar insbesondere Kraftfahrzeug-Kennzeichen, mit berührungslos auslesbaren und/oder beschreibbaren Datenträgern 14 zu versehen, vorzugsweise zu beschicken. Dabei kann es sich um RFID-Chips handeln, die in unterschiedlichen Frequenzbereichen arbeiten, aber beispielsweise auch NFC (near field communication)-Chips. Im vorliegenden Ausführungsbeispiel wird davon ausgegangen, dass jedes Kennzeichen mit einem einzigen Datenträger 14 zu bestücken ist. Die Erfindung eignet sich aber auch dazu, Kennzeichen mit mehreren gleichen oder auch unterschiedlichen Datenträgern 14 zu bestücken.

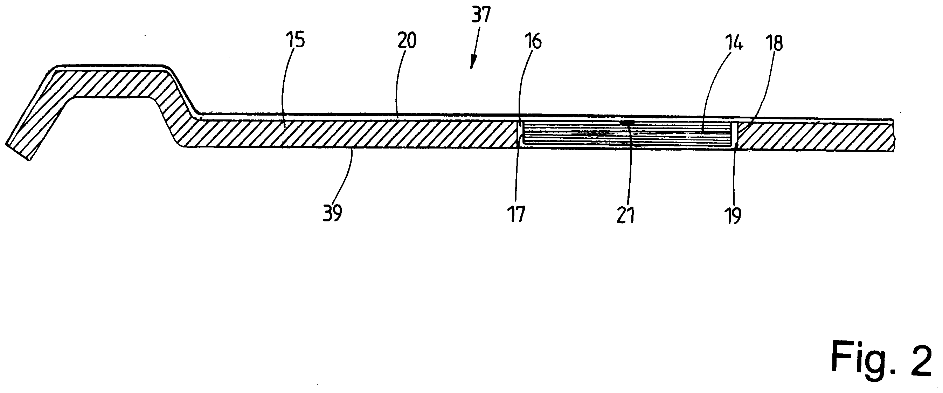

Beim hier gezeigten Ausführungsbeispiel wird ein aus einem elektrisch-leitenden Material, beispielsweise Aluminium oder alternativ auch mindestens teilweise leitfähig gemachten Kunststoff, gebildeter Kennzeichenkörper 15 des Kennzeichens mit dem Datenträger 14 versehen, insbesondere verbunden. Dazu verfügt der Kennzeichenkörper 15 über eine Aufnahme für den Datenträger 14. Im vorliegenden Ausführungsbeispiel ist die Aufnahme als ein beispielsweise gestanzter Durchbruch 16 im Kennzeichenkörper 15 gebildet. Bei der Aufnahme kann es sich aber auch um eine Mulde im Kennzeichenkörper 15 handeln. Der Durchbruch 16 erstreckt sich ununterbrochen mit gleichem Querschnitt von einer Vorderseite 37 zur Rückseite 39 des Kennzeichenkörpers 15 (Fig. 2). Der Durchbruch 16 verfügt über eine mit dem Grundriss des Datenträgers 14 korrespondierende Grundfläche. Jedoch ist der Durchbruch 16 etwas größer als die Grundfläche des Datenträgers 14, so dass nach dem Einsetzen des Datenträgers 14 im Durchbruch 16 der äußere Rand 17 des Datenträgers 14 von den Umrissen 18 des Durchbruchs 16 ringsherum beabstandet ist, vorzugsweise gleichmäßig. Dadurch entsteht ein ringsherum umlaufender Spalt 19 zwischen dem Datenträger 14 und dem Durchbruch 16. Bevorzugt ist der ringförmige Spalt 19 überall etwa gleich breit.

Beim gezeigten Kennzeichen weist der Kennzeichenkörper 15 einen länglichen Schlitz 38 auf. Der Schlitz 38 mündet an einer schmalen Seite im Durchbruch 16, so dass der Schlitz 38 in den Durchbruch 16 übergeht. Der Schlitz 38 bildet insbesondere mindestens einen Teil einer Antenne für den Datenträger 14.

Der Datenträger 14 ist durch Vergießen mit einer gießfähigen, nicht-leitenden Vergussmasse, beispielsweise einem gießfähigen und vorzugsweise durch UV-Strahlung sich verfestigenden oder aushärtenden Kunststoff- und/oder Kunstharzmasse, dauerhaft im Durchbruch 16 mit dem Kennzeichenkörper 15 verbunden. Dabei kann der Datenträger 14 vollständig in der Vergussmasse eingebettet sein, so dass die Vergussmasse nicht nur den umlaufenden Spalt 19 ausfüllt, sondern auch die Vorderseite 37 und/oder Rückseite 39 des Datenträgers 14 vollflächig abdeckt. Gegebenenfalls kann eine Seite des Datenträgers 14 von der Vergussmasse bzw. dem Vergussmaterial nicht abgedeckt sein.

Beim gezeigten Ausführungsbeispiel ist der Kennzeichenkörper 15, und zwar die im montierten Zustand des Kennzeichens sichtbare (in der Fig. 2 obenliegende) Vorderseite 37 des Kennzeichenkörpers 15, mit einer dünnen Folie 20, beispielsweise einer Selbstklebefolie, überdeckt bzw. kaschiert. Die Folie 20 erstreckt sich zumindest über die Fläche des Durchbruchs 16 und einen umlaufend anschließenden Randbereich desselben. Gegebenenfalls deckt die Folie 20 die gesamte Unterseite des Kennzeichenkörpers 15 ab (Fig. 2).

Die erste Arbeitsstation 10 ist ausgebildet zur Aufbringung einer einzigen Haftstelle 21, gegebenenfalls aber auch mehrerer Haftstellen 21. Bei der Haftstelle 21 kann es sich beispielsweise um einen kleinflächigen Vergussmassen- oder Kleberpunkt handeln. Die Haftstelle 21 wird in den Umrissen des Durchbruchs 16, oder alternativ einer Mulde, aufgebracht, vorzugsweise im Flächenmittelpunkt. Die Applikation der Haftstelle 21 im Durchbruch 16 oder der Mulde führt dazu, dass die Haftstelle 21 im Bereich des Durchbruchs 16 freiliegend auf der Folie 20 positioniert wird. Dann befindet sich die Haftstelle 21 innerhalb des Durchbruchs 16 auf der Folie 20. Die Haftstelle 21 kann zum Beispiel aus einem Heißkleber oder einem verfestigbaren Gussmaterial gebildet sein, die nach dem Aufbringen noch Hafteigenschaften aufweist zur Vorfixierung des Datenträgers 14.

Die erste Arbeitsstation 10 kann entfallen, wenn die Haftstelle 21 durch die Klebeschicht auf der ins Innere des Durchbruchs 16 weisenden Unterseite (Fig. 2) der Folie 20 gebildet wird, weil dann keine separate Haftstelle 21 mehr appliziert werden braucht.

In Transportrichtung 22 des Förderers 16 folgt auf die erste Arbeitsstation 10 - sofern diese nicht entfallen kann - die zweite Arbeitsstation 11. In dieser Arbeitsstation 11 wird der Kennzeichenkörper 15 mit dem Datenträger 14 bestückt durch automatisches Einsetzen des Datenträgers 14 in den Durchbruch 16. Dabei wird die Unterseite des Datenträgers 14 auf die Haftstelle 21 im Durchbruch 16 oder direkt der Folie 20 abgelegt und gegebenenfalls aufgedrückt zum Vorfixieren des Datenträgers 14 im Durchbruch 16 des Kennzeichenkörpers 15.

Die in Transportrichtung 22 auf die zweite Arbeitsstation 11 folgende dritte Arbeitsstation 12 dient dazu, den Datenträger 14 im Durchbruch 16 des Kennzeichenkörpers 15 einzubetten und/oder zu vergießen, wodurch der Datenträger 14 geschützt im Durchbruch 16 untergebracht ist und dauerhaft im Durchbruch 16 fixiert wird zur nicht beschädigungslos lösbaren Verbindung des Datenträgers 14 mit dem Kennzeichenkörper 15. Außerdem führt das Eingießen bzw. Einbetten des Datenträgers 14 im Durchbruch 16 dazu, den Datenträger 14 gegenüber dem elektrisch leitfähigen Kennzeichenkörper 15 zu isolieren.

Vor der ersten Arbeitsstation 10 befindet sich ein in den Figuren nicht gezeigtes Magazin mit einem Vorrat mehrerer Kennzeichenkörper 15. Das Magazin kann so ausgebildet sein, dass es batchweise Kennzeichenkörper 15 unterschiedlicher Formate aufnehmen kann. Vom Magazin aus werden einzelne Kennzeichenkörper 15 nach und nach automatisch, beispielsweise durch eine entsprechende Beschickungsvorrichtung, auf Obertrumen 23 der Förderer 13 abgelegt, vorzugsweise abwechselnd. Dies kann je nach Ausbildung der Vorrichtung an bestimmten, beispielsweise durch Anschläge und/oder Kennzeichenkörperträger festgelegte, Positionen auf dem Obertrum 23 geschehen, alternativ aber auch in einer ungefähren Position. Die Orientierung des Kennzeichenkörpers 15 insbesondere hinsichtlich seines Durchbruchs 16 sollte aber bevorzugt stets die gleiche sein.

Die Kennzeichenkörper 15 werden umgekehrt, nämlich mit obenliegender Rückseite 39, auf den Obertrum 23 der Förderer 13 positioniert, damit die Durchbrüche 16 in den Kennzeichenkörpern 15, die auf der Vorderseite 37 des Kennzeichenkörpers 15 von der Folie 20 abgedeckt sind, von der Rückseite 39 des Kennzeichenkörpers 15 her frei zugänglich sind. Durch die rückseitig frei zugänglichen, offenen Durchbrüche 16 in den Kennzeichenkörpern 15 können Haftstellen 21 in die Durchbrüche 16 eingebracht und die Durchbrüche 16 mit Datenträgern 14 bestückt werden. Außerdem können die rückseitig offenen Durchbrüche 16 so vergossen werden.

Die erste Arbeitsstation 10 verfügt über eine Handhabungseinrichtung 24, die am Ende ihres Arms eine Spendereinrichtung 25 trägt. Die Spendereinrichtung 25 ist so ausgebildet, dass es gezielt einen Tropfen eines fließfähigen Gießmaterials zur Bildung der Haftstelle 21 abgeben kann. Der Spendereinrichtung 25 ist ein Bevorratungsmittel zugeordnet und zusätzlich eine Heizeinrichtung, falls es sich beim Leim bzw. Kleber um einen Heißkleber handelt.

Die erste Arbeitsstation 10 verfügt darüber hinaus über eine bildgebende Einrichtung 26, beispielsweise eine Kamera, wobei es sich um eine zwei- oder dreidimensionale Kamera, und zwar eine Schwarz/Weiß-Kamera oder eine Farbkamera, handeln kann. Die bildgebende Einrichtung 26 erfasst die Position des Durchbruchs 16 des auf dem Obertrum 23 des jeweiligen Förderers 13 in der ersten Arbeitsstation 10 bereitgehaltenen Kennzeichenkörpers 15. Von der bildgebenden Einrichtung 26 aufgenommene Bilddaten werden an eine Steuerung der Handhabungseinrichtung 24 übertragen, wo aus den Daten die Position des Durchbruchs 16 relativ zur Handhabungseinrichtung 24 und/oder zur Spendereinrichtung 25 berechnet wird. Anhand der so errechneten Position kann dann von der Handhabungseinrichtung 14 die Spendereinrichtung 25 in die zum Auftragen der Haftstelle 21 vorgesehene Position zum Durchbruch 16 gebracht und die Haftstelle 21 vorzugsweise mittig im Durchbruch 16 auf der Folie 20 appliziert werden.

Auch die zweite Arbeitsstation 11 verfügt über eine zentrale Handhabungseinrichtung 27. Am freien Ende eines Greifarms 28 der Handhabungseinrichtung 27 befindet sich mindestens ein mit Unterdruck beaufschlagbarer Sauger 29 mit einem elastisch verformbaren Saugnapf. Der Sauger 29 ist so ausgebildet und bemessen, dass er eine Flachseite, und zwar die Oberseite eines Datenträgers 14 mit Unterdruck hält.

Die Handhabungseinrichtung 27 ist bei der gezeigten zweiten Arbeitsstation 11 etwa zwischen dem inneren der beiden parallelen, nebeneinander verlaufenden Förderer 13 und einem Vorförderer 30 einer Bevorratungseinrichtung 31 angeordnet. Die Bevorratungseinrichtung 31 enthält einen Vorrat aus einer Vielzahl vorzugsweise gleicher Datenträger 14. Aus diesem Vorrat gelangen nach und nach Datenträger 14 auf ein Obertrum 32 des als Gurtförderer ausgebildeten Vorförderers 30. Auf dem Obertrum 32 liegt stets eine Mehrzahl von Datenträgern 14 in beliebiger Orientierung. Dabei können die Ober- bzw. Unterseiten der Datenträger 14 wahllos oben oder unten liegen. Der Fördergurt des Vorförderers 30 ist vorzugsweise kontinuierlich mit geringer Geschwindigkeit umlaufend antreibbar, so dass sich das Obertrum 32 des Förderers 13 mit den darauf liegenden Datenträgern 14 entgegen der Transportrichtung 22 weiterbewegt.

Die zweite Arbeitsstation 11 weist im Bereich des Vorförderers 30 über seinem Obertrum 32 eine erste bildgebende Einrichtung 33 auf. Diese erfasst bildlich alle oder zumindest die im Einflussbereich des Greifarms 28 der Handhabungseinrichtung 27 sich befindende Datenträger 14 auf dem Obertrum 32. Die bildgebende Einrichtung 33 erfasst auch, welche Seite der Datenträger 14 oben liegt. Nach Auswertung der von der bildgebenden Einrichtung 33 an die Steuerung der Bevorratungseinrichtung 31 übertragenen Daten wird mindestens ein Sauger 29 der Handhabungseinrichtung 27 an die aus den Daten der bildgebenden Einrichtung 30 ermittelte Position eines solchen Datenträgers 14 gefahren, der problemlos zu ergreifen ist und sich zum Bestücken des Kennzeichenkörpers 15 eignet, weil er richtig herum auf dem Obertrum 32 des Vorförderer 30 liegt, also mit tatsächlich obenliegender Oberseite, die nach dem Bestücken des Kennzeichenkörpers 15 auch oben liegen soll.

Falsch herum auf dem Obertrum 32 des Vorförderers 30 liegende Datenträger 14 werden nicht ergriffen und vom Vorförderer 30 zurücktransportiert an den Anfang des Vorförderers 30 bzw. der Bevorratungseinrichtung 31. Sie gelangen dann mit Kreislauf und ggf. richtiger Orientierung wieder auf den Anfang des Vorförderers 30.

Zum bildlichen Erfassen der Datenträger 14 und zum Ansaugen eines ausgewählten Datenträgers 14 vom Sauger 29 der Handhabungseinrichtung 24 kann der Antrieb des Vorförderers 30 kurzzeitig stillgesetzt werden. Bevorzugt ist vorgesehen, dass der Vorförderer 30 kontinuierlich angetrieben wird, und zwar stets mit einer gleichbleibenden Geschwindigkeit, die die Steuerung der Handhabungseinrichtung 27 berücksichtigen bzw. kompensieren kann.

Der Handhabungseinrichtung 27 ist bevorzugt in der Nähe des Vorförderers 30 eine Lesestation 34 zugeordnet. Diese Lesestation 34 dient dazu, nach dem Ergreifen eines Datenträgers 14 vom Sauger 29 der Handhabungseinrichtung 27 mindestens eine im Datenträger 14 schon abgespeicherte Information berührungslos auszulesen. Dieses kann zum Beispiel eine Seriennummer des Datenträgers 14 sein, aber auch alternativ oder zusätzlich mindestens eine andere Angabe, beispielsweise eine Adressangabe. Anhand dieser kann nach dem Bestücken des Kennzeichenkörpers 15 mit dem Datenträger 14 das Kennzeichen identifiziert werden.

Die zweite Arbeitsstation 11 kann des Weiteren eine Prüfeinrichtung aufweisen, die den von der Handhabungseinrichtung 27 ergriffenen Datenträger 14 dahingehend prüft, ob er in Ordnung ist, insbesondere sich auslesen lässt.

Die Prüfstation ist bevorzugt in die Lesestation 34 integriert, so dass mit dem Auslesen mindestens einer Information aus dem ergriffenen Datenträger 14 gleichzeitig die Prüfung desselben verknüpft ist. Beispielsweise weist die Nichtlesbarkeit der gewünschten Informationen auf eine Fehlfunktion des Datenträgers 14 hin. Ein solcher Datenträger 14 ist unbrauchbar und wird durch Loslassen von der Handhabungseinrichtung 27 als Ausschuss ausgeschleust.

Nach oder gegebenenfalls auch während des Auslesens der gewünschten Daten aus dem Datenträger 14 wird von der Handhabungseinrichtung 27 der unter dem Sauger 29 derselben gehaltene Datenträger 14 von einer zweiten bildgebenden Einrichtung 35 hinsichtlich seiner exakten Position unter dem Sauger 29, also an der Handhabungseinrichtung 27, erfasst. Diese bildgebende Einrichtung 35 ist zwischen dem Vorförderer 30 und dem diesen gegenüberliegenden Förderer 13 angeordnet, und zwar unterhalb des Saugers 29. Auf diese Weise gelangt der vom Sauger 29 der Handhabungseinrichtung 27 gehaltene Datenträger 14 auf den Weg zum Förderer 13 an der bildgebenden Einrichtung 35 vorbei. Während der Vorbeibewegung an der bildgebenden Einrichtung 35 oder einer kurzen Verweildauer an derselben vermisst die bildgebende Einrichtung 35 die Relativlage des vom Sauger 29 gehaltenen Datenträgers 14. Dadurch ist zum Beispiel feststellbar, an welcher Stelle in einem beispielsweise durch die vertikale Längsmittelachse des Saugers 29 verlaufenden Koordinatensystem der Datenträger 14 von der Handhabungseinrichtung 27 gehalten ist. Die an eine Steuerung der Handhabungseinrichtung 27 übertragenen Daten der zweiten bildgebenden Einrichtung 35, und zwar daraus gewonnene Positionswerte, liefern der Handhabungseinrichtung 27 erste Bezugswerte für das positionsgenaue Einsetzen des Datenträgers 14 in den Durchbruch 16 des Kennzeichenkörpers 15.

Die zweite Arbeitsstation 11 weist mindestens eine weitere bildgebende Einrichtung 36 auf. Bei der gezeigten Vorrichtung mit zwei Förderern 13 ist jedem Förderer 13 eine eigene bildgebende Einrichtung 36 zugeordnet. Jede der beiden bildgebenden Einrichtungen 36 ist über einem der beiden parallelen Förderer 13 angeordnet. Die jeweilige bildgebende Einrichtung 36 erfasst bildlich die Position des Durchbruchs 16 des umgedreht auf dem jeweiligen Förderer 13 liegenden Kennzeichenkörpers 15. Derjenige Kennzeichenkörper 15, der vom jeweiligen Förderer 13 als erstes in eine für einen Datenträger 14 übernahmebereite Position gebracht worden ist, wird vorrangig mit dem momentan von der Handhabungseinrichtung 27 gehaltenen Datenträger 14 bestückt ("first in - first out"-Prinzip). Ist das beispielsweise ein Kennzeichenkörper 15 auf einem äußeren Förderer 13, wird von der diesem zugeordneten bildgebenden Einrichtung 36 der Durchbruch 16 aufgenommen. Die Bilddaten werden dann an die Steuerung der Handhabungseinrichtung 27 übertragen, die die genaue Position des Durchbruchs 16 des Kennzeichenkörpers 15 errechnet. Die so errechnete Position des Durchbruchs 17 liefert der Handhabungseinrichtung 27 die zweite zum Bestücken erforderliche Position. Von der Handhabungseinrichtung 27 wird dann der von dieser gehaltene Datenträger 14 exakt über den Durchbruch 16 des Kennzeichenkörpers 15 auf dem äußeren Förderer 13 positioniert und in den Durchbruch 16 eingesetzt. Dies geschieht derart, dass der Datenträger 14 auf dem zuvor an der ersten Arbeitsstation 10 im Durchbruch 26, nämlich dort auf die Haftstelle 21 auf der auf dem Förderer 13 direkt aufliegenden Folie 20 unter dem umgedreht auf dem Förderer 13 liegenden Kennzeichenkörper 15, positionsgenau aufgesetzt und gegebenenfalls aufgedrückt wird, wodurch die Haftstelle 21 den Datenträger 14 in seiner von der Handhabungseinrichtung 27 eingesetzten Position vorfixiert.

Beim Bestücken des Kennzeichenkörpers 15 mit dem Datenträger 14 in der zweiten Arbeitsstation 11 erfolgt das Vorfixieren des Datenträgers 14 am Kennzeichenkörper 15 durch insbesondere die mindestens eine Haftstelle 21. Außerdem erfolgt die automatische Bestückung gezielt derart, dass der umlaufende, vorzugsweise gleich breite, Spalt 19 zwischen dem Rand des Datenträgers 14 und den Umrissen 18 des Durchbruchs 16 entsteht und dadurch der Datenträger 14 keinen Kontakt zum leitenden Kennzeichenkörper 15 aufweist.

Die auf die zweite Arbeitsstation 11 folgende dritte Arbeitsstation 12 dient dazu, den Datenträger 14 im Durchbruch 16 des Kennzeichenkörpers 15 dauerhaft zu fixieren. Dazu wird in der dritten Arbeitsstation 12 der vom Kennzeichenkörper 15 nicht ausgefüllte Raum des Durchbruchs 16 mit einem fließfähigen isolierenden Material, beispielsweise durch UV-Strahlung aushärtende Kunststoff- oder Kunstharzmasse, ausgegossen. Der vom Datenträger 14 im Durchbruch 16 frei gelassene Raum wird dadurch ausgefüllt, und zwar vorzugsweise lückenlos. Hierbei wird zumindest der umlaufende Spalt 19 zwischen dem Rand 17 des Datenträgers 14 und den Umrissen 18 des Durchbruchs 16 ausgefüllt. Dadurch wird eine umlaufende brückenartige Verbindung des Datenträgers 14 mit dem Kennzeichenkörper 15 hergestellt. Gleichzeitig dient das elektrisch nicht-leitfähige Vergussmaterial dazu, im Spalt 19 eine umlaufende Isolierung um den Datenträger 14 zu bilden, damit dieser keinen elektrisch leitenden Kontakt zum Kennzeichenkörper 15 aufweist. Das Vergussmaterial füllt insbesondere auch den von der zur Vorfixierung im Bereich des Durchbruchs 16 an der ersten Arbeitsstation 10 auf die Folie 20 aufgebrachten Haftstelle 21 gebildeten Zwischenraum zwischen der Folie 20 und der Unterseite des Datenträgers 14 aus. Dadurch wird die gesamte Unterseite des Datenträgers 14 auch mit Vergussmaterial benetzt und überdeckt. Beim Eingießen des Datenträgers 14 in den Durchbruch 16 kann auch die Oberseite des Datenträgers 14 vollständig und vollflächig von der Vergussmasse überdeckt werden. Dadurch ist der Datenträger 14 allseitig von Vergussmasse umschlossen im Durchbruch 16 fixiert. Außerdem ist der Datenträger 14 vollständig in der elektrisch nicht-leitenden Vergussmasse eingebettet. Dabei kann die Vergussmasse bündig mit der Rückseite 39 des Kennzeichenkörpers 15 abschließen.

Das Vergießen des Datenträgers 14 in der dritten Arbeitsstation 12 erfolgt durch eine dieser zugeordneten Handhabungseinrichtung. Dazu weist die Handhabungseinrichtung genauso wie die Handhabungseinrichtung 24 der ersten Arbeitsstation 10 eine Spendereinrichtung auf, die von einem Vorrat mit fließfähiger und/oder gießfähiger Masse oder einer sonstigen elektrisch nicht leitenden Substanz versorgbar ist.

Die dritte Arbeitsstation 12 verfügt auch über eine bildgebende Einrichtung. Diese bildgebende Einrichtung nimmt Bilddaten auf, woraus die Position des Kennzeichenkörpers 15 auf dem jeweiligen Förderer 13 und/oder des Durchbruchs 16 und/oder des darin eingesetzten Datenträgers 14 errechnet wird. Von der Handhabungseinrichtung wird dann die an derselben angeordnete Spendereinrichtung für fließfähige bzw. durch Erhitzen fließfähig gemachte Vergussmasse an die mittels der bildgebenden Einrichtung ermittelte Position über den Datenträger 14 im Durchbruch 16 des Kennzeichenkörpers 15 verfahren und eine genau dosierte Menge der zum Ver- bzw. Ausgießen des Datenträgers 14 im Durchbruch 16 dienenden Vergussmasse aus der Spendereinrichtung ausdosiert. Die Vergussmasse fließt dann in die Hohlräume zwischen dem Durchbruch 16 und dem Datenträger 14 und füllt diese lückenlos aus, bevor sie fest wird und/oder aushärtet, z. B. durch Lichteinwirkung.

Abschließend wird der mit dem Datenträger 14 bestückte und vergossene Kennzeichenkörper 15 vom betreffenden Förderer 13 abtransportiert zu einer Abstapel- und/ oder Verpackungseinrichtung der mit Datenträgern 14 versehenen Kennzeichenkörper 15. Gegebenenfalls können die Förderer 13 flußabwärts der dritten Arbeitsstation 12 verlängert sein zur Bildung einer Verfertigungsstrecke. Dadurch wird sichergestellt, dass die Vergussmasse ausreichend fest werden und ggf. auch abkühlen kann, so dass die abschließende Fixierung des Datenträgers 14 im Durchbruch 16 des Kennzeichenkörpers 15 sich nicht mehr lösen kann.

An der Stelle aller oder nur einiger bildgebender Einrichtungen 26, 33, 35 bzw. 36 können andersartig ausgestaltete vermessende Einrichtungen verwendet werden, bei denen es sich nicht zwingend um Kameras handelt muss.

Die Erfindung ist auch nicht auf drei aufeinanderfolgend verkettete Arbeitsstationen beschränkt. Die Anzahl der Arbeitsstationen kann größer oder kleiner sein. Beispielsweise kann die erste Arbeitsstation fehlen, wenn die Folie 20 auf ihrer zum Durchbruch 16 weisenden Seite selbstklebend ist, weil dann die Anbringung mindestens einer Haftstelle 21 auf der Folie 20 im Bereich des Durchbruchs 16 nicht mehr erforderlich ist. Auch ist es beispielsweise denkbar, die zweite Arbeitsstation 11 und die dritte Arbeitsstation 12 zusammenzufassen und/oder mehrere Arbeitsstationen zusammenhängend auszubilden.

Auch die Anzahl der Förderer 13 kann variieren. Es können mehr als zwei Förderer 13 sein oder auch nur ein einziger Förderer 13. Ebenfalls brauchen die Förderer 13 nicht zwingend als Gurtförderer ausgebildet zu sein. Es kann sich hierbei auch um Taschenförderer, Funktionsrollenbahnen oder ähnliches handeln.

Ein in den Zeichnungen nicht dargestelltes zweites Ausführungsbeispiel der Erfindung sieht es vor, eine fortlaufende und/oder bandförmige Materialbahn aus dem Material des Kennzeichenkörpers, insbesondere Aluminium oder einem sonstigen elektrisch leitfähigen Material, mit Datenträgern zu bestücken und dauerhaft mit den Materialbahnen zu verbinden. In Längsrichtung der Materialbahn folgen noch von der Materialbahn verkettete Kennzeichenkörper zur Bildung jeweils eines Kennzeichens aufeinander, vorzugsweise dicht nebeneinander. Die Materialbahnen weisen eine Breite auf, die der Breite des Kennzeichenschilds entspricht oder etwas breiter ist. Die Materialbahn kann vor einer Vorratsrolle endlos und/oder fortlaufend abgewickelt werden.

Die Materialbahn weist an bestimmten definierten Stellen Aufnahmen, und zwar entweder Durchbrüche oder Vertiefungen, für jeweils einen Datenträger auf. Dazu weist die Materialbahn für jeden daraus auszustanzenden Kennzeichenkörper bzw. Kennzeichen vorzugsweise eine einzige Aufnahme, gegebenenfalls aber auch mehrere Aufnahmen, auf.

Nachdem die Aufnahmen der Materialbahn nach und nach mit Datenträgern versehen und hieran befestigt sind, werden aus der Materialbahn nacheinander Zuschnitte, insbesondere sogenannte Platinen, für den Kennzeichenkörper jedes Kennzeichens ausgestanzt. Gleichzeitig oder nachträglich kann der Kennzeichenkörper mit einer umlaufenden Randprägung versehen werden. In die so mit jeweils mindestens einem Datenträger bestückten Kennzeichenkörper werden später die vorgesehenen Ziffern, insbesondere Buchstaben und/oder Zahlen sowie gegebenenfalls Zeichen, die das jeweilige Kennzeichenschild individualisieren, eingeprägt.

Im Folgenden wird davon ausgegangen, dass aus der Materialbahn Kennzeichen, vorzugsweise Kraftfahrzeugkennzeichen, mit nur jeweils einem einzigen Datenträger herzustellen sind, ohne dass darauf die Erfindung beschränkt sein soll.

Die Materialbahn mit einer Aufnahme für den Datenträger jedes Kennzeichens wird an den einzelnen aufeinanderfolgenden Arbeitsstationen, vorzugsweise drei Arbeitsstationen gemäß dem zuvor beschriebenen Ausführungsbeispiel, entlang bewegt, und zwar vorzugsweise diskontinuierlich mit kurzen Stillstandszeiten an den einzelnen Arbeitsstationen. Dazu können die einzelnen Arbeitsstationen wie beim zuvor beschriebenen ersten Ausführungsbeispiel mit einem gemeinsamen Förderer verkettet sein. Es ist aber auch denkbar, lediglich eine an allen Arbeitsstationen vorbeiführende Auflage, beispielsweise eine Rollenbahn mit nicht angetriebenen Rollen, vorzusehen. Der Weitertransport der Materialbahn erfolgt dann durch Entlangziehen der Materialbahn auf der Unterlage, Auflage oder Rollenbahn. Dabei wird vorzugsweise gleichzeitig ein Vorrat der Materialbahn von einer Rolle oder dergleichen abgezogen.

Das Beschicken der Aufnahmen der Materialbahn mit Datenträgern an der zweiten Arbeitsstation ist wie das Vorfixieren an der ersten Arbeitsstation und das endgültige Fixieren, insbesondere Ausgießen der Aufnahmen, nämlich des am jeweiligen Datenträger freigelassenen Bereichs der Aufnahmen an der dritten Arbeitsstation, erfolgt bei der Vorrichtung dieses Ausführungsbeispiels prinzipiell genauso wie beim zuvor beschriebenen Ausführungsbeispiel, wozu auf die vorangegangene Beschreibung der Vorrichtung und des Verfahrens des in den Figuren gezeigten, ersten Ausführungsbeispiels Bezug genommen wird.

Abweichend vom zuvor beschriebenen Ausführungsbeispiel der Erfindung sind die Durchbrüche für die Datenträger an exakt den vorgesehenen Positionen, die sie bei den später auszustanzenden Kennzeichen bzw. Kennzeichenkörpern aufweisen sollen, in der Materialbahn bzw. dem Materialstreifen eingebracht oder auf denselben aufgebracht. Die Materialbahn oder der Materialstreifen werden beim Vorbeibewegen an den einzelnen Arbeitsstationen seitlich, also quer zur Fortbewegungs- bzw. Transportrichtung mit beispielsweise Anschlägen geführt. Dadurch gelangen die Durchbrüche mit einer exakten Ausrichtung quer zur Längsrichtung der streifenartigen Materialbahn an die einzelnen Arbeitsstationen. Anhand der exakt positionierten Durchbrüche in Längsrichtung der Materialbahn ist der Weitertransport derselben von Arbeitsstation zu Arbeitsstation an jeder Arbeitsstation exakt positioniert anhaltbar. Das kann von Messeinrichtungen, beispielsweise Lichtschranken oder auch Weggebern am Antrieb zur Weiterbewegung der streifenförmigen Materialbahn geschehen. Dadurch werden die Durchbrüche in der Materialbahn bzw. im Materialstreifen vorzugsweise aller Arbeitsstationen exakt positioniert bereitgestellt. Zum Applizieren der Datenträger in den Durchbrüchen können dann die Handhabungseinrichtungen gezielt die exakt vorgegebenen Positionen der Datenträger in der Materialbahn anfahren.

Bevorzugt ist es vorgesehen, die einzelnen Arbeitsstationen in solchen Abständen aufeinanderfolgen zu lassen, dass beim in einer bestimmten, von zum Beispiel einer Messeinrichtung ermittelten Position gestoppten Weitertransport der Materialbahn an allen Arbeitsstationen gleichzeitig die diesen zugedachten Tätigkeiten, und zwar mindestens das Applizieren und gleichzeitige Vorfixieren des jeweiligen Datenträgers in oder auf der Aufnahme sowie das endgültige Fixieren des Datenträgers durch Ein- und/oder Umgießen, ausführbar sind.

Beim Applizieren der Datenträger in oder auf den Aufnahmen der fortlaufenden Materialbahn ist es nicht zwingend erforderlich, dass bildgebende Einrichtungen an mindestens einigen Arbeitsstationen die Position der Aufnahme ermitteln, an denen die Aufnahmen mit Datenträgern zu versehen und/oder die Datenträger in den Aufnahmen zu vergießen sind. Weil die Aufnahmen in exakt vorgegebenen Positionen in die Materialbahn eingebracht sind, reichen die vorstehend beschriebenen einfachen Messeinrichtungen auch zum Positionieren der Materialbahn an den Arbeitsstationen, vorzugsweise gleichzeitig allen Arbeitsstationen, aus, um die Datenträger auf oder in den Aufnahmen richtig und exakt zu positionieren bzw. die Datenträger in bzw. an den Aufnahmen abschließend dauerhaft mit Vergussmasse zu fixieren. Dabei brauchen zumindest in der ersten und/oder dritten Arbeitsstation nicht zwingend Handhabungseinrichtungen vorgesehen zu sein.

Falls die Materialbahn unterseitig bereits mit einer selbstklebenden Folie beschichtet und die Aufnahme als ein durchgehender Durchbruch in der Materialbahn ausgebildet ist, kann gegebenenfalls das Aufbringen mindestens einer Haftstelle an der ersten Arbeitsstation gemäß dem zuvor beschriebenen ersten Ausführungsbeispiel entfallen. Dann braucht die erste Arbeitsstation bei diesem zweiten Ausführungsbeispiel nicht vorhanden zu sein.

Falls bei diesem Ausführungsbeispiel noch eine erste Arbeitsstation zur Aufbringung mindestens einer Haftstelle aus einem Kleber oder Vergussmasse vorgesehen ist, braucht die mindestens eine Haftstelle nicht zwingend durch eine Handhabungsrichtung aufgebracht zu werden. Wegen der stets an der gleichen Stelle an der Arbeitsstation bereitgestellten Aufnahme in der Materialbahn kann es ausreichen, an dieser Stelle der ersten Arbeitsstation nur wenigstens eine Spendeeinrichtung für das Material der jeweiligen Haftstelle vorzusehen, und zwar vorzugsweise ortsfest.

Auch die dritte Arbeitsstation oder - bei nicht vorhandener erster Arbeitsstation - die letzte Arbeitsstation braucht nicht zwingend eine Handhabungseinrichtung zum Vergießen des an der vorherigen Arbeitsstation applizierten Datenträgers aufzuweisen, weil auch an dieser letzten Arbeitsstation die Materialbahn derart gestoppt wird, dass die jeweilige Aufnahme mit dem bereits applizierten Datenträger sich stets exakt an der gleichen Stelle befindet. Dann braucht an dieser letzten Arbeitsstation keine Handhabungseinrichtung zwingend vorhanden zu sein. Es kann ausreichen, an dieser letzten Arbeitsstation dann nur mindestens einen auch vorzugsweise ortsfesten Spender für die Vergussmasse vorzusehen.

### Bezugszeichenliste:

- 10: erste Arbeitsstation
- 11: zweite Arbeitsstation
- 12: dritte Arbeitsstation
- 13: Förderer
- 14: Datenträger
- 15: Kennzeichenkörper
- 16: Durchbruch
- 17: Rand
- 18: Umriss
- 19: Spalt
- 20: Folie
- 21: Haftstelle
- 22: Transportrichtung
- 23: Obertrum
- 24: Handhabungseinrichtung
- 25: Spendereinrichtung
- 26: bildgebende Einrichtung
- 27: Handhabungseinrichtung
- 28: Greifarm
- 29: Sauger
- 30: Vorförderer
- 31: Bevorratungseinrichtung
- 32: Obertrum
- 33: bildgebende Einrichtung
- 34: Lesestation
- 35: bildgebende Einrichtung
- 36: bildgebende Einrichtung
- 37: Vorderseite
- 38: Schlitz
- 39: Rückseite

## Patentansprüche

1. Verfahren zum Versehen eines Kennzeichens, vorzugsweise eines Kraftfahrzeug-Kennzeichens, mit mindestens einem berührungslos auslesbaren Datenträger (14), wobei der mindestens eine Datenträger (14) von einer Handhabungseinrichtung (27) gezielt erfasst wird, und der oder der jeweilige Datenträger (14) in einer dafür vorgesehenen Aufnahme eines Kennzeichenkörpers (15) oder einer Materialbahn zur Bildung von Kennzeichenkörpern des Kennzeichens positioniert wird, **dadurch gekennzeichnet, dass** die Position des oder jedes von der Handhabungseinrichtung (27) gehaltenen Datenträgers (14) durch eine vermessende oder bildgebende Einrichtung (35) ermittelt wird, wobei vor dem von der Handhabungseinrichtung (27) erfolgenden Bestücken des Kennzeichenkörpers (15) oder der Materialbahn zur Bildung von Kennzeichenkörpern mit dem jeweiligen Datenträger (14) die Position des Kennzeichenkörpers (15) oder der Materialbahn und/oder der Aufnahme im oder am Kennzeichenkörper (15) oder der Materialbahn durch wenigstens eine vermessende oder bildgebende Einrichtung (36) ermittelt wird, und anschließend anhand der dabei erhaltenen Position des Datenträgers (14) an der Handhabungseinrichtung (27) der Kennzeichenkörper (15) oder die Materialbahn mit mindestens einem Datenträger (14) bestückt werden.

2. Verfahren nach Anspruch 1, **dadurch gekennzeichnet, dass** aus einer Mehrzahl von Datenträgern (14), insbesondere einer Mehrzahl von auf einer ebenflächigen Unterlage liegenden Datenträgern (14), unterstützt durch eine vermessende oder bildgebende Einrichtung (33) ein oder gleichzeitig mehrere Datenträger (14) von der Handhabungseinrichtung (27) erfasst wird/werden, und/oder nach dem Erfassen des jeweiligen Datenträgers (14) von der Handhabungseinrichtung (27) der betreffende Datenträger (14) geprüft wird, beispielsweise durch Prüfung der Auslesbarkeit mindestens einiger Daten des Datenträgers (14).

3. Verfahren nach Anspruch 1 oder 2, **dadurch gekennzeichnet, dass** nach dem Erfassen mindestens eines Datenträgers (14) von der Handhabungseinrichtung (27) mindestens einzelne Daten aus dem Datenträger (14) ausgelesen und vorzugsweise in einem Speicher abgelegt werden.

4. Verfahren nach einem der vorhergehenden Ansprüche, **dadurch gekennzeichnet, dass** der Datenträger (14) beim von der Handhabungseinrichtung (27) erfolgenden Einsetzen in die Aufnahme des Kennzeichenkörpers (15) oder die jeweilige Aufnahme in der Materialbahn zur Bildung von Kennzeichenkörpern vorfixiert wird, vorzugsweise durch Aufsetzen auf mindestens eine Haftstelle (21) auf bzw. in der jeweiligen Aufnahme.

5. Verfahren nach einem der vorhergehenden Ansprüche, **dadurch gekennzeichnet, dass** von der Handhabungseinrichtung (27) der jeweilige Datenträger (14) derart in eine insbesondere als Durchbruch (16) im Kennzeichenkörper (15) oder einer Materialbahn zur Bildung des Kennzeichenkörpers ausgebildete Aufnahme eingesetzt wird, dass der Datenträger (14), vorzugsweise ein umlaufender Rand (17) desselben, von den Umrissen des Durchbruchs (16) beabstandet ist, vorzugsweise gleichmäßig beabstandet ist, und/oder ein umlaufender Spalt (19) zwischen dem Umriss (18) des Durchbruchs (16) und dem Rand (17) des Datenträgers (14) gebildet wird.

6. Verfahren nach einem der Ansprüche 1 bis 5, **dadurch gekennzeichnet, dass** der Kennzeichenkörper (15) von seiner Rückseite (39) her mit der mindestens einen Haftstelle (21) versehen und/oder dem wenigstens einen Datenträger (14) bestückt und/oder der jeweilige Datenträger (14) in seiner jeweiligen Aufnahme eingegossen bzw. vergossen wird.

## Claims

1. A method for providing a registration plate, preferably a motor vehicle licence plate, with at least one data carrier (14) which can be read contactlessly, wherein the at least one data carrier (14) is gripped by a handling device (27) in a targeted manner, and the or the respective data carrier (14) is positioned in a receptacle, provided for this purpose, of a plate body (15) or of a material web for the formation of plate bodies of the registration plate, **characterized in that** the position of the or each of the data carriers (14) held by the handling device (27) is determined by a measuring or imaging device (35), wherein before the handling device (27) fits the plate body (15) or the material web for the formation of plate bodies with the respective data carrier (14), the position of the plate body (15) or of the material web and/or of the receptacle in or on the plate body (15) or of the material web is determined by at least one measuring or imaging device (36), and the plate body (27) or the material web is then fitted with at least one data carrier (14) on the basis of the obtained position of the data carrier (14) on the handling device (27).

2. The method as claimed in claim 1, **characterized in that,** supported by a measuring or imaging device (33), one or simultaneously a plurality of data carriers (14) is/are gripped by the handling device (27) from a plurality of data carriers (14), in particular a plurality of data carriers (14) lying on a level surface and/or after the respective data carrier (14) has been gripped by the handling device (27) the relevant data carrier (14) is tested, for example by a test of the readability of at least some data on the data carrier (14).

3. The method as claimed in claim 1 or 2, **characterized in that** after the at least one data carrier (14) has been gripped by the handling device (27) at least individual data are read from the data carrier (14) and preferably stored in a memory.

4. The method as claimed in one of the preceding claims, **characterized in that** the data carrier (14) is pre-fixed in the receptacle of the plate body (15) when it is inserted by the handling device (27) into the receptacle of the plate body (15) or the respective receptacle in the material web for the formation of plate bodies, preferably by being placed on at least one adhesion site (21) on or in the respective receptacle.

5. The method as claimed in one of the preceding claims, **characterized in that** the respective data carrier (14) is inserted in such a manner by the handling device (27) into the receptacle, which is realised in particular as an opening (16) in the plate body (15) or material web for the formation of the plate body, that the data carrier (14), preferably a circumferential edge (17) of same, is spaced apart, preferably uniformly, from the contours of the opening (16) and/or a circumferential gap (19) is formed between the contour (18) of the opening (16) and the edge (17) of the data carrier (14).

6. The method as claimed in any one of the claims 1 to 5, **characterized in that** the plate body (15) is provided, from its rear side (39), with the at least one adhesion site (21) and/or is fitted with the at least one data carrier (14) and/or the respective data carrier (14) is cast or recast in its respective receptacle.

## Revendications

1. Procédé permettant de doter une plaque d'immatriculation, de préférence une plaque d'immatriculation de véhicule automobile, d'au moins un support de données lisibles sans contact (14), l'au moins un support de données (14) étant détecté de manière ciblée par un dispositif de manipulation (27) et le support de données ou le support de données respectif (14) étant positionné dans un logement dédié d'un corps de plaque d'immatriculation (15) ou d'une bande de matière destinée à former des corps de plaque d'immatriculation de la plaque d'immatriculation, **caractérisé en ce que** la position du ou de chaque support de données (14) maintenu par le dispositif de manipulation (27) est déterminée par un dispositif de mesure ou d'imagerie (35), avant de doter, par le biais du dispositif de manipulation (27), le corps de plaque d'immatriculation (15) ou la bande de matière destinée à former des corps de plaque d'immatriculation du support de données respectif (14), la position du corps de plaque d'immatriculation (15) ou de la bande de matière et/ou du logement dans ou sur le corps de plaque d'immatriculation (15) ou de la bande de matière étant déterminée par au moins un dispositif de mesure ou d'imagerie (36) puis, sur la base de la position résultante du support de données (14) sur le dispositif de manipulation (27), le corps de plaque d'immatriculation (15) ou la bande de matière est doté d'au moins un support de données (14).

2. Procédé selon la revendication 1, **caractérisé en ce que**, parmi une pluralité de supports de données (14), en particulier une pluralité de supports de données (14) situés sur un substrat plan et supportés par un dispositif de mesure ou d'imagerie (33), un ou simultanément plusieurs supports de données (14) sont détectés par le dispositif de manipulation (27) et/ou après que le support de données respectif (14) a été détecté par le dispositif de manipulation (27), le support de données concerné (14) est vérifié, par exemple en termes de lisibilité d'au moins certaines données sur le support de données (14).

3. Procédé selon la revendication 1 ou 2, **caractérisé en ce que**, après qu'au moins un support de données (14) a été détecté par le dispositif de manipulation (27), au moins des données individuelles sont lues sur le support de données (14) et de préférence stockées dans une mémoire.

4. Procédé selon l'une des revendications précédentes, **caractérisé en ce que** le support de données (14) est préfixé lorsque le dispositif de manipulation (27) l'insère dans le logement du corps de plaque d'immatriculation (15) ou le logement respectif de la bande de matière destinée à former des corps de plaque d'immatriculation, de préférence par placement sur au moins un point de fixation adhésif (21) sur ou dans le logement respectif.

5. Procédé selon l'une des revendications précédentes, **caractérisé en ce que** le support de données respectif (14) est inséré par le dispositif de manipulation (27) dans un logement conçu notamment comme un passage (16) ménagé dans le corps de plaque d'immatriculation (15) ou une bande de matière destinée à former le corps de plaque d'immatriculation de manière à ce que le support de données (14), de préférence un bord circonférentiel (17) de celui-ci, soit espacé du contour du passage (16), de préférence uniformément espacé, et/ou un espace circonférentiel (19) soit formé entre le contour (18) du passage (16) et le bord (17) du support de données (14).

6. Procédé selon l'une des revendications 1 à 5, **caractérisé en ce que** le corps de plaque d'immatriculation (15) est doté, depuis son côté arrière (39), d'au moins un point de fixation adhésif (21) et/ou équipé de l'au moins un support de données (14) et/ou le support de données respectif (14) est injecté ou déversé par coulage dans son logement respectif.
